(19) Europäisches Patentamt / European Patent Office / Office européen des brevets

(11) **EP 2 919 165 B1**

## (12) EUROPEAN PATENT SPECIFICATION

(45) Date of publication and mention
of the grant of the patent:
**07.02.2018  Bulletin 2018/06**

(51) Int Cl.:
***G06K 9/62*** *(2006.01)*

(21) Application number: **14199432.7**

(22) Date of filing: **19.12.2014**

(54) **Method and device for clustering**

Verfahren und Vorrichtung zum Clustering

Procédé et dispositif de classification automatique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2014  CN 201410097422**

(43) Date of publication of application:
**16.09.2015  Bulletin 2015/38**

(73) Proprietor: **Xiaomi Inc.
Beijing 100085 (CN)**

(72) Inventors:
• **Chen, Zhijun
  100085 Beijing (CN)**
• **Zhang, Tao
  100085 Beijing (CN)**
• **Zhang, Bo
  100085 Beijing (CN)**
• **Wang, Lin
  100085 Beijing (CN)**

(74) Representative: **Delumeau, François Guy et al
Cabinet Beau de Loménie
158, rue de l'Université
75340 Paris Cedex 07 (FR)**

(56) References cited:
**CN-A- 103 914 518**

• **CHUNHUI ZHU ET AL: "A rank-order distance based clustering algorithm for face tagging", COMPUTER VISION AND PATTERN RECOGNITION (CVPR), 2011 IEEE CONFERENCE ON, IEEE, 20 June 2011 (2011-06-20), pages 481-488, XP032038182, DOI: 10.1109/CVPR.2011.5995680 ISBN: 978-1-4577-0394-2**
• **Alexandros Nanopoulos ET AL: "C2P: Clustering based on Closest Pairs", Proceedings of the Twenty-seventh International Conference on Very Large Data Bases, Roma, 11 - 14th September 2001, 11 September 2001 (2001-09-11), pages 331-340, XP055228188, Orlando, Fla. ISBN: 978-1-55860-804-7 Retrieved from the Internet: URL:http://www.vldb.org/conf/2001/P331.pdf [retrieved on 2015-11-12]**
• **Charu C. Aggarwal: "Outlier Analysis", 1 January 2013 (2013-01-01), Springer, XP002750855, pages 101-133, * page 118, paragraph 1 - page 125, paragraph 3; figure 4.5 * * page 109, paragraph 3 ***
• **MARKUS BREUNIG ET AL: "LOF: Identifying Density-Based Local Outliers", SIGMOD '00 PROCEEDINGS OF THE 2000 ACM SIGMOD INTERNATIONAL CONFERENCE ON MANAGEMENT OF DATA, 16 May 2000 (2000-05-16), pages 93-104, XP55226141, NEW YORK, NY, US DOI: 10.1145/342009.335388 ISBN: 978-1-58113-217-5**

EP 2 919 165 B1

## Description

### TECHNICAL FIELD

The present disclosure generally relates to the field of computer technology, and particularly, to the field of clustering techniques.

### BACKGROUND

Clustering is a process of grouping a set of physical or abstract objects into a plurality of classes each composed of similar objects, that is, a process of classifying objects into different classes (clusters), such that objects in the same class have large similarity, and objects from different classes have large dissimilarity. Hereinafter, a concept of "class" is used, and it should be noted that, "class" and "cluster" have the same meaning as used herein.

For example, when a method for clustering is used to classify human face pictures, so as to classify pictures of a same person into one class, a Rank-Order distance is used by the method for clustering in the related art to measure similarity between two human faces, and pictures of the same person can be clustered together. "A rank order distance based clustering algorithm for face tagging" by Zhu (IEEE Conference on Computer Vision and Pattern Recognition, 2011, pages 481-488) describes an iterative technique that performs clustering based on Rank-Order distance. The paper "C2P: Clustering based on Closest Pairs" by Nanopoulos et al (Proc. Of the 27th International Conference on Very Large Databases, 2001, pages 331-340) describes an algorithm for clustering objects in a database, in which outliers are removed by determining the minimum inter-object distance between each object and the others in a database and removing objects having a minimum inter-object distance greater than a threshold size. However, in case that the number of faces contained in a group of pictures is too large, and the number of pictures of each person is too small, accuracy of the clustering results by such a method for clustering is rather low.

### SUMMARY

In order to overcome the problems that exist in the related art, a method and a device for clustering are provided by the present disclosure, which may improve accuracy of a clustering result.

In order to solve the above technical problems, the present disclosure discloses the following technical solutions.

According to a first aspect, the invention relates to a method for clustering, implemented on a device, the method comprising:

iteratively merging classes according to inter-class Rank-Order distances; obtaining an intra-class convergence degree corresponding to each class after the iterative merge, said intra-class convergence degree being either the average of all the inter-object distances within the class or the normalized average of the inter-object distances within the class; for each class obtained by the iterative merge, removing objects that do not have an inter-object distance, with any other object within the same class, that is less than the intra-class convergence degree from the objects within the class that do have an inter-object distance, with another object within the same class, that is less than the intra-class convergence degree, grouping together into a new class the objects within the class that have inter-object distances with one another that are less than the intra-class convergence degree, and updating a number of the classes; if the number of classes after an update is less than the number of classes before the update, returning to the step of performing the iterative merge on the classes according to inter-class Rank-Order distances, until the number of classes is the same before and after an update whereupon the classes after the update constitute a clustering result.

In a particular embodiment of the invention, the obtaining of the intra-class convergence degree corresponding to each class after the iterative merge is performed in the following manner:

obtaining respective inter-object distances within the class; and calculating an average distance of all the inter-object distances within the class according to the inter-object distances within the class, to obtain the intra-class convergence degree of the class.

In combination with the first aspect, in a second possible implementation way of the first aspect, the obtaining of the intra-class convergence degree corresponding to the class after the iterative merge is performed in the following manner:

obtaining respective inter-object distances within the class; calculating an average distance of all the inter-object distances within the class according to the inter-object distances within the class; and normalizing the average distance to obtain the intra-class convergence degree of the class.

In a particular embodiment of the invention, for each class obtained by the iterative merge, the step of grouping together into a new class objects within the class that have the inter-object distances with one another less than the intra-class convergence degree and updating the number of classes is performed in the following manner:

marking the objects within the class which have a distance less than the intra-class convergence degree with a connection mark; determining connected components within the class according to the connection marks; dividing the class into new classes according to the connected components, and updating the number of classes.

In a particular embodiment of the invention, the performing of the iterative merge on classes according to inter-class Rank-Order distances is performed in the following manner:

obtaining inter-class Rank-Order distances and obtaining normalized inter-class Rank-Order distances; merging the classes if an inter-class Rank-Order distance is less than a distance threshold and a normalized inter-class Rank-Order distance is less than 1.

According to a second aspect, the invention relates to a device for clustering, this device comprising:

an iteratively merging unit configured to iteratively merge classes according to inter-class Rank-Order distances; an obtaining unit configured to obtain an intra-class convergence degree corresponding to each class after the iterative merge, said intra-class convergence degree being either the average of all the inter-object distances within the class or the normalized average of all the inter-object distances within the class; a dividing unit configured to for each class obtained by the iterative merge, remove objects that do not have an inter-object distance, with any other object with the same class, less than the intraclass convergence degree from the objects within the class that do have an inter-object distance, with another object in the class, less than the intra-class convergence degree, grouping together into a new class the objects within the class that have inter-object distances with one another that are less than the intra-class convergence degree, and update the number of classes; and a judging unit configured to if the number of classes after an update is less than the number of classes before the update, control the iteratively merging unit to iteratively merge the classes according to inter-class Rank-Order distances, until the number of classes is the same before and after an update whereupon the classes after the update constitute a clustering result.

In a particular embodiment of the invention, the obtaining unit comprises:

a first obtaining sub unit configured to obtain inter-object distances within the class; and a first calculating sub unit configured to calculate an average distance of all the inter-object distances within the class, to obtain the intra-class convergence degree of the class.

In a particular embodiment of the invention, the obtaining unit comprises:

a second obtaining sub unit configured to obtain respective inter-object distances within the class; a second calculating sub unit configured to calculate an average distance of all the inter-object distances within the class according to the inter-object distances within the class; and a normalization sub unit configured to normalize the average distance to obtain the intra-class convergence degree of the class.

In a particular embodiment of the invention, the dividing unit comprises:

a first judging sub unit configured to judge whether an inter-object distance within the class is less than the intra-class convergence degree; a marking sub unit configured to mark, if an inter-object distance within the class is less than the intra-class convergence degree, the objects corresponding to the inter-object distance within the class with a connection mark; a determining sub unit configured to determine connected components within the class according to the connection marks; and a dividing sub unit configured to divide the class into new classes according to the connected components, and update the number of classes.

In a particular embodiment of the invention, the iteratively merging unit comprises:

a third obtaining sub unit configured to obtain inter-class Rank-Order distances and obtain normalized inter-class Rank-Order distances; a merge sub unit configured to merge the classes which have an inter-class Rank-Order distance that is less than a distance threshold and a normalized inter-class Rank-Order distance that is less than 1.

According to a third aspect, the invention relates to a terminal device comprising:

a processor; and a memory configured to store instructions executable by the processor;
wherein the processor is configured to:

iteratively merge classes according to inter-class Rank-Order distances; obtain an intra-class convergence degree corresponding to the class after the iterative merge by using inter-object distances within the class; for each class obtained by the iterative merge, group objects within the class that have a distance less than the intra-class convergence degree into a new class, and update the number of classes; if the number of classes after an update is less than the number of classes before the update, return to the step of performing an iterative merge on the classes according to inter-class Rank-Order distances, until the number of classes is the same before and after an update, to obtain a clustering result, the clustering result including one or more classes containing a plurality of objects and one or more classes containing a single object.

In one particular embodiment, the steps of the method for clustering are determined by computer program instructions.

Consequently, according to a fourth aspect, the invention is also directed to a computer program for executing the steps of a method for clustering as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

Some advantageous effects brought by the technical solutions provided by the embodiments of the present disclosure may include: through the method for clustering, firstly, classes satisfying a certain condition are merged according to inter-class Rank-Order distances, so as to reduce the number of the classes; secondly, the intra-class convergence degree is calculated according to inter-object distances within the class; thirdly, objects within the class that have a distance less than the intra-class convergence degree are divided into a new class, until all of the classes has been divided. Then the divided classes are re-merged iteratively and re-divided until every class is not able to be divided, so as to determine the classes containing a plurality of objects and the classes containing a single object. Thereby the objects with relatively large dissimilarity are removed during the clustering process, thus the accuracy of the clustering result may be improved. In particular, when objects in a data set are relatively too many, and objects belong to a same class is relatively too few, the accuracy of the clustering result may be higher.

It should be understood that, the general description above and the detailed description below are only exemplary, and do not limit the present disclosure.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a schematic view showing a plurality of objects being ranked into sequences;
Fig. 2 is a flow chart showing a method for clustering according to an exemplary embodiment;
Fig. 3 is a flow chart showing a step S110 in Fig. 2 according to an exemplary embodiment;
Fig. 4 is a flow chart showing a step S110 in Fig. 2 according to another exemplary embodiment;
Fig. 5 is a flow chart showing a step S120 in Fig. 2 according to an exemplary embodiment;
Fig. 6 is a flow chart showing a step S130 in Fig. 2 according to an exemplary embodiment;
Fig. 7 is a block diagram showing a device for clustering according to an exemplary embodiment;
Fig. 8 is a block diagram showing a terminal device according to an exemplary embodiment;
Fig. 9 is a block diagram showing a server according to an exemplary embodiment.

Explicit embodiments of the present disclosure that have been illustrated in the above accompany drawings will be described in further detail hereinafter. These accompany drawings and literal description are by no means intended to limit the scope of the idea of the present disclosure, but to explain the concept of the present disclosure to those skilled in the art with reference to particular embodiments.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the disclosure as recited in the appended claims.

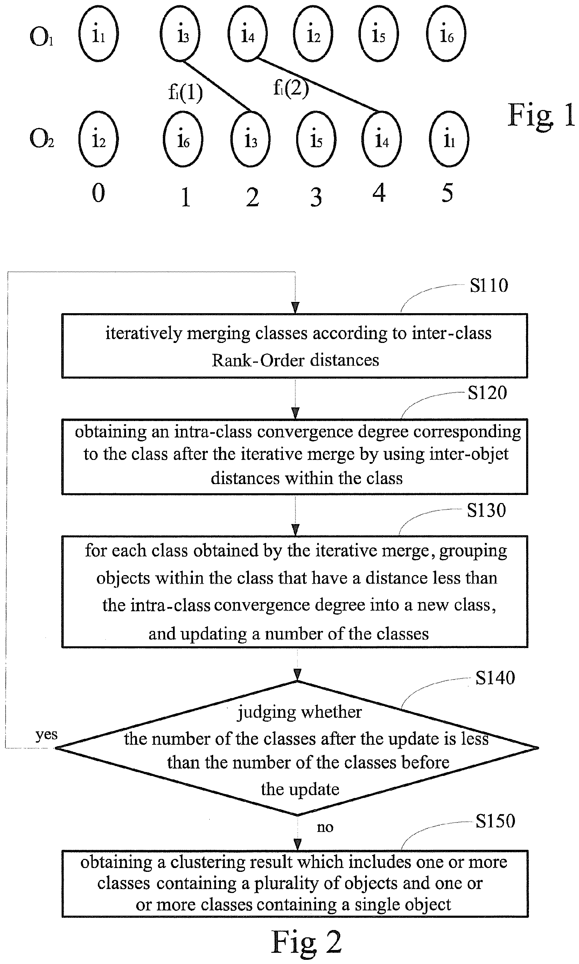

Before the exemplary embodiments of the present disclosure are described, related knowledge of Rank-Order distance is firstly introduced, wherein: distances (such as cosine similarity, an Euclidean distance, etc.) between objects are calculated, and the objects are ranked again according to magnitudes of the distances so as to obtain a sequence. Assuming that there are n objects, respectively $i_1$, $i_2$, $i_3$, $i_4$; $i_5$, $i_6$; ..., $i_n$, if the object $i_1$ is taken as a reference object, a distance between each of the other objects and the object $i_1$ is calculated, and the objects are ranked according to the magnitudes of the distances, so as to obtain a sequence $O_1$ shown in Fig. 1; if the object $i_2$ is taken as a reference object, a distance between each of the other objects and the object $i_2$ is calculated, so as to obtain a sequence $O_2$ shown in Fig. 1

An asymmetric Rank-Order distance $D(i_1,i_2)$ between the objects $i_1$ and $i_2$ is calculated according to sequence numbers in the sequence $O_2$ of neighbor objects that are between the objects $i_1$ and $i_2$ in the sequence $O_1$. Specifically, in the example shown in Fig. 1, the sequence numbers of the objects $i_1$, $i_3$, $i_4$ and $i_2$ in the sequence $O_2$ are respectively 5, 2, 4 and 0, so $D(i, i_2)$ is calculated according to a formula (1) as follows.

$$D(i_1, i_2) = \sum_{x=0}^{O_1(i_2)} O_2(f_1(X)) = O_2(i_1) + O_2(i_3) + O_2(i_4) + O_2(i_2) = 5+2+4+0 = 11$$

(1)

In the formula (1), $O_2(i_1)$ represents the sequence number of the object $i_1$ in the sequence $O_2$, $O_2(i_3)$ represents the sequence number of the object $i_3$ in the sequence $O_2$, $O_2(i_4)$ represents the sequence number of the object $i_4$ in the sequence $O_2$, and $O_2(i_2)$ represents the sequence number of the object $i_2$ in the sequence $O_2$.

Similarly, an asymmetric Rank-Order distance $D(i_2, i_1)$ between the objects $i_1$ and $i_2$ is calculated. Then, a normalized Rank-Order distance $D^R(i_1,i_2)$ between the objects $i_1$ and $i_2$ is calculated according to a formula (2) as follows.

$$D^R(i_1,i_2) = \frac{D(i_1,i_2) + D(i_2,i_1)}{\min(O_1(i_2), O_2(i_1))}$$

(2)

$D^R(i_1,i_2)$ represents a normalized Rank-Order inter-object distance. Calculation of a inter-class Rank-Order distance is similar to the calculation of a Rank-Order inter-object distance, wherein: a class is taken as a reference class, and the classes are ranked again according to the distances between classes. The inter-classe distance is calculated according to a formula (3) as follows.

$$d(C_i, C_j) = \min d(a,b) \forall a \in C_i, b \in C_j$$

(3)

In the formula (3), $C_i$ or $C_j$ represents a class.

An inter-class Rank-Order distance is calculated according to an formula (4) as follows.

$$D^R(C_i, C_j) = \frac{D(C_i, C_j) + D(C_j, C_i)}{\min(O_{C_i}(C_j), O_{C_j}(C_i))} \qquad (4)$$

In the formula (4), $D(C_i,C_j)$ represents an asymmetric inter-class Rank-Order distance between the classes $C_i$ and $C_j$; $D(C_j,C_i)$ represents an asymmetric Rank-Order distance between the classes $C_j$ and $C_i$; $O_{C_i}(C_j)$ represents a sequence number of the class $C_j$ in a sequence taking $C_i$ as a reference class, and $O_{C_j}(C_i)$ represents a sequence number of the class $C_i$ in a sequence taking $C_j$ as a reference class.

A normalized Rank-Order distance $D^N(C_i,C_j)$ between classes is calculated from a distance $d(C_i,C_j)$ between classes. Wherein, a normalized inter-class Rank-Order distance is calculated according to a formula (5) as follows.

$$D^N(C_i, C_j) = \frac{1}{\phi(C_i, C_j)} \bullet d(C_i, C_j)$$

$$\phi(C_i, C_j) = \frac{1}{|C_i| + |C_j|} \sum_{a \in C_i \cup C_j} \frac{1}{K} \sum_{k=1}^{K} d(a, f_a(k)) \qquad (5)$$

In the formula (5), $d(C_i,C_j)$ represents a distance between the classes $C_i$ and $C_j$; $|C_i|$ and $|C_j|$ represents the number of objects in a class; K is a constant; $f_a(k)$ represents a kth neighbor object of an object a; and $\phi(C_i,C_j)$ represents an average distance between the K objects that are the closest to the classes $C_i$ or $C_j$.

Assuming that the objects are human face images, then through the method for clustering provided by the present disclosure, images of a same person may be clustered together as one cluster. Characters in a human face image are transformed into a group of vectors. Thus, inter-object distances are distances between the vectors. Needless to say, the method for clustering provided by the present disclosure may also be applied to other types of data.

Fig. 2 is a flow chart showing a method for clustering according to an exemplary embodiment. As shown in Fig. 2, the method for clustering is applied in a terminal, and may include the following steps.

In step S110, classes are iteratively merged according to inter-class Rank-Order distances.

The Rank-Order distances between every two classes are calculated, and classes having a Rank-Order distance less than a first distance threshold are merged. The first distance threshold may be determined according to the type of the data, and may also be determined according to experimental results.

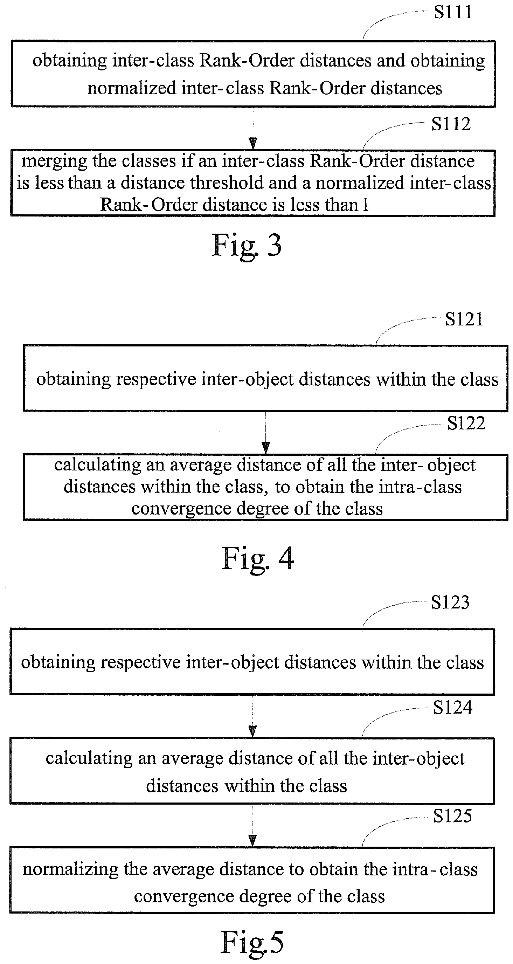

As shown in Fig. 3, step S110 may include the following steps.

In step S111, the inter-class Rank-Order distances are obtained, and normalized inter-class Rank-Order distances are obtained.

Assuming that initially, the number of human face images is N, and each human face image is taken as one individual class, then initially, the number of classes is N. Also, a distance threshold t and a constant K are set. For any classes $C_i$ and $C_j$, a Rank-Order distance $D^R(C_i,C_j)$ between the classes and a normalized Rank-Order distance $D^N(C_i, C_j)$ between the classes are obtained by calculating according to the above formulas (1) - (5). The initial number of classes is N, and thus a NxN matrix of $D^R(C_i,C_j)$ and a N×N matrix of $D^N(C_i,C_j)$ are obtained. In the matrix of $D^R(C_i,C_j)$, each vector represents a Rank-Order distance between the corresponding classes, for example, in the matrix, $C_{ij}$ represents the Rank-Order distance between the class $C_i$ and $C_j$, and a vector $C_{ij}$ in the matrix of $D^N(C_i,C_j)$ represents a normalized Rank-Order distance between the class $C_i$ and $C_j$.

In step S112, if the inter-class Rank-Order distance is less than the distance threshold, and the normalized inter-class Rank-Order distance is less than 1, the classes are merged.

$D^R(C_i,C_j)$ that is less than the distance threshold t is selected from the matrix of $D^R(C_i,C_j)$, and $D^N(C_i,C_j)$ that is less than 1 is selected from the matrix of $D^N(C_i,C_j)$. If $D^R(C_i,C_j)$ <t, and $D^N(C_i,C_j)$<1, it is determined that similarity between the class $C_i$ and $C_j$ is large, that is, the classes $C_i$ and $C_j$ are candidate classes to be merged, and then all of the candidate classes to be merged are merged. If $D^R(C_i,C_j) \geq t$, it indicates that similarity between the classes $C_i$ and $C_j$ is small; and if $D^N(C_i,C_j) \geq 1$, it indicates that discrete degree between the classes is large.

In step S120, an intra-class convergence degree corresponding to the class after the iterative merge is calculated by using inter-object distances within the class.

In one embodiment of the present disclosure, as shown in Fig. 4, step S120 may include the following steps.

In step S121, the inter-object distances within the class are obtained. An inter-object distance may be cosine similarity, an Euclidean distance or a Jaccard distance, etc.

It should be noted that, in the present disclosure, when the inter-object distance is calculated by using a cosine similarity cosθ, the inter-object distance is defined as 1-cosθ. Thus, the smaller the inter-object distance is, the larger the similarity between the objects will be.

In step S122, an average distance of all the inter-object distances within the class is calculated, and the intra-class convergence degree of the class is obtained.

Assuming that there are n objects in the class, an nxn matrix d of distances is obtained according to distances between every two within the class. In the matrix, each vector indicates a distance between two corresponding objects. For example, a vector $d_{ij}$ in the matrix d represents a distance between an ith object and a jth object within the class. This step is performed to calculate an average d_aver of all the vectors in the matrix d.

In another embodiment of the present disclosure, as shown in Fig. 5, step S120 may include the following steps.

In step S123, respective inter-object distances within the class are obtained.

In step S124, an average distance of all the distances between every two of the objects is calculated according to the distances between every two objects.

In step S125, the average distance is normalized to obtain the intra-class convergence degree of the class.

The average distance d_aver is normalized, that is, d_aver is inducted into a range [dleft, dright], in which dleft or dright is a threshold. For example, dleft may be 0.6, and dright may be 0.75. For example, normalization may be performed according to a formula (6) as follows.

$$d\_aver = \begin{cases} dleft, & d\_aver < dleft \\ dright, & d\_aver > dright \\ d\_aver, & dleft \le d\_aver \le dright \end{cases} \tag{6}$$

For example, if the average distance is calculated to be 0.5, the intra-class convergence degree is obtained after normalization as to be 0.6; if the average distance is 0.65, the intra-class convergence degree after normalization is 0.65; and if the average distance is 0.78, the intra-class convergence degree after normalization is 0.75.

In the embodiments of the present disclosure, the intra-class convergence degree is measured by (1-cosine similarity). Therefore, the smaller the intra-class convergence degree is, the more convergent of the objects within the class and the more similarity of the objects within the class it will indicate. Therefore, the intra-class convergence degree is normalized into a range of, for example, [0.6, 0.75]. When the intra-class convergence degree is in the range of normalization, the objects within the class are grouped according to the intra-class convergence degree. When the intra-class convergence degree is out of the range of normalization, the objects within the class are grouped according to the threshold, so as to realize that a class having a large intra-class convergence degree (namely, a large discrete degree) may be appropriately divided into a plurality of classes, and thus, it may be avoided that a class having a small intra-class convergence degree is divided into too many classes.

In step S130, for each class obtained by the iterative merge, objects within the class that have a distance less than the intra-class convergence degree are grouped into a new class, and the number of classes is updated.

For each class after the iterative merge according to Rank-Order distances, the class is divided according to the inter-object distances in the class and the intra-class convergence degree. So far, one iteration is completed, and then step S140 is performed.

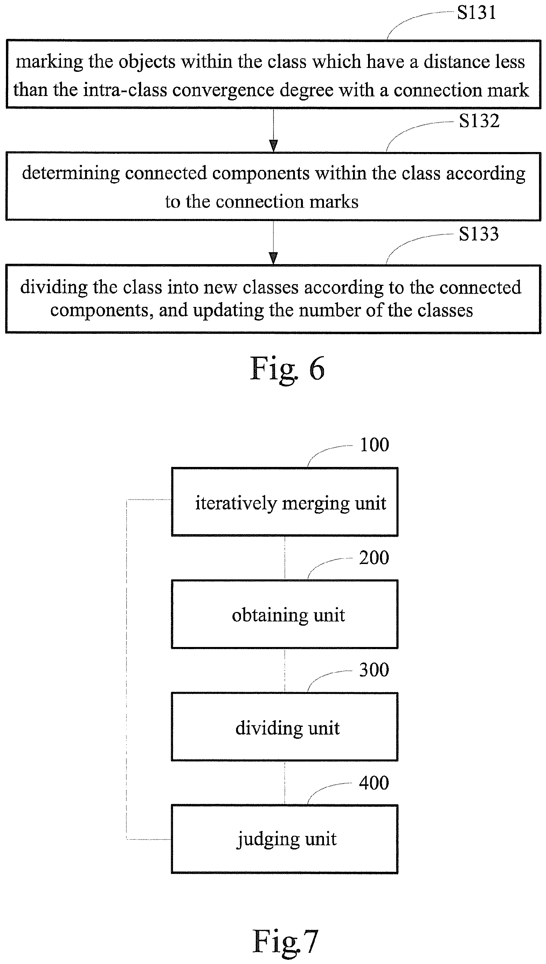

In one embodiment of the present disclosure, as shown in Fig. 6, step S130 may include the following steps.

In step S 131, the objects within the class which have a distance less than the intra-class convergence degree are marked with a connection mark.

For any object within the class, it is checked whether a distance between the object and any other object within the class in the matrix of the inter-object distances within the class is less than the intra-class convergence degree, and if a inter-object distance is less than the intra-class convergence degree, similarity between the objects is indicated to be large, and the objects may be grouped into one class. At this time, the two objects associated with the distance may be given a connection mark. For example, if a distance $d_{ij}$ between two human face images is less than the intra-class convergence degree, the ith object and the jth object are connected.

If a inter-object distance in the class is greater than the intra-class convergence degree, similarity between the objects is indicated to be small, and the objects may not be appropriately grouped into one class, so they are not marked.

In step S132, connected components within the class are determined according to the connection marks.

Objects that can be connected are taken as one connected component. Thereby, it is judged how many connected components that all of the objects within the class may be grouped into.

In step S133, the class is divided into new classes according to the connected components, and the number of classes is updated.

Objects corresponding to each connected component are grouped into one new class, that is, this big class is divided into as many new classes as the number of the connected components contained in one class, and the number of classes increases accordingly. By dividing connected components, it may be realized that objects do not belong to a class may be removed from the cluster, that is, the discrete objects are removed from the cluster.

In step S140, it is judged whether the number of classes after the update is less than the number of classes before the update. If it is, the process is returned to perform step S110, and if it is not, the process is proceed to enter step S150.

If the number of classes after the update is less than the number of classes before the update, the process is returned to perform step S110, which is a step of performing an iterative merge on the classes according to inter-class Rank-Order distances, until the numbers of the classes are the same before and after an update.

As one iteration, the classes are merged based on Rank-Order distances, and new classes are divided. Assuming that the number of classes is 6 before a merge, and is changed into 4 after a merge based on Rank-Order distances, and then the 4 classes after the merge is divided into 5 classes at last. In this case, the number of classes after the update is 5, the number of classes before the update is 6, so the number after the update is less than the number before the update, and then the process is returned and continued to perform iteration once more.

If the number of classes after the update is less than the number of classes before the update, it indicates that the intra-class discrete degree is large, that is, the objects within the class are not convergent enough, and discrete objects may exist. Therefore, the iterative merge should be continually performed on the divided classes, and the classes are then divided until the number of classes after the update is not greater than the number of classes before the update.

When the numbers of classes are the same before and after the update, in step S150, a clustering result is obtained, and the clustering result includes one or more classes containing a plurality of objects and one or more classes containing a single object.

When the number of classes after the update equals the number of classes before the update, it indicates that there is no discrete point within the class that needs to be removed. The final clustering result obtained includes one or more classes containing a plurality of objects and one or more classes containing a single object. The objects within the class containing a plurality of objects are human face images of a same person. The class containing a single object has a discrete object removed from a class after an iterative merge using Rank-Order distances.

Through the method for clustering provided by this embodiment, after the classes are merged using Rank-Order distances, similarity between two objects are measured using inter-object distances (such as 1- cosine similarity, an Euclidean distance, etc.) within the class, and an object with smaller similarity (larger dissimilarity) is removed from the class (as a new class), that is to remove a noise point from the class, thereby the accuracy of clustering may be improved. In particular, when objects in a data set are relatively too many, and objects belong to a same class are relatively too few, the accuracy of the clustering result may be higher.

Significant effects of the method for clustering according to the present disclosure are explained with specific experimental data in the following, as shown in Table 1.

Table 1

| | number of the human faces in all images | number of different person in all images | clustering results only using Rank-Order distances | | | clustering results of the method for clustering according to the present disclosure | | |
|---|---|---|---|---|---|---|---|---|
| | | | P | R | CR | P | R | CR |
| scene 1 | 2291 | 562 | 0.861 | 0.78 | 4.20 | 0.991 | 0.66 | 4.25 |
| scene 2 | 241 | 35 | 0.84 | 0.76 | 3.95 | 1 | 0.65 | 3.5 |
| scene 3 | 378 | 6 | 0.98 | 0.90 | 7.7 | 1 | 0.80 | 6.1 |

In Table 1, P represents accuracy of a clustering result, R represents a recall rate of a clustering result, and CR represents an average number of human face images in each class in a clustering result.

It can be seen from Table 1 that, in the first scene, the number of human faces contained in all of the images is 2291 in total, and 562 different persons are contained in all of the images, so on average, each person corresponds to 4.07 human face images. That is, in all of the images, on average 4.07 human face images belong to a same person. Accordingly, in a clustering result only using Rank-Order distances in the related art, the accuracy is 86.1%, and the clustering accuracy of the method for clustering according to the present disclosure is 99.1%, which is much higher than the accuracy of the clustering only using Rank-Order distances. In the second scene and the third scene, the accuracies of the method for clustering according to the present disclosure are both higher than the accuracies of the clustering only using Rank-Order distances.

Corresponding to the above embodiments of the method for clustering, a device for clustering is provided by the present disclosure.

Fig. 7 is a block diagram showing a device for clustering according to an exemplary embodiment. Referring to Fig. 7, the device includes an iteratively merging unit 100, an obtaining unit 200, a dividing unit 300 and a judging unit 400.

The iteratively merging unit 100 is configured to iteratively merge classes according to inter-class Rank-Order distances.

In one embodiment of the present disclosure, the iteratively merging unit 100 may include a third obtaining sub unit and a merge sub unit; wherein

the third obtaining sub unit is configured to obtain inter-class Rank-Order distances and obtain normalized inter-class Rank-Order distances; and

the merge sub unit is configured to merge the classes satisfying the conditions that a inter-class Rank-Order distance is less than a distance threshold and a normalized inter-class Rank-Order distance is less than 1.

The obtaining unit 200 is configured to obtain an intra-class convergence degree corresponding to the class after the iterative merge by using the inter-object distances within the class.

In one embodiment of the present disclosure, the obtaining unit 200 may include a first obtaining sub unit and a first calculating sub unit; wherein

the first obtaining sub unit is configured to obtain inter-object distances within the class; and

the first calculating sub unit is configured to calculate an average distance of all the inter-object distances within the class, to obtain the intra-class convergence degree of the class.

In another embodiment of the present disclosure, the obtaining unit 200 may include a second obtaining sub unit, a second calculating sub unit and a normalization sub unit; wherein

the second obtaining sub unit is configured to obtain inter-object distances within the class, function and implementation of the second obtaining sub unit being the same with those of the first obtaining sub unit;

the second calculating sub unit is configured to calculate an average distance of all the inter-object distances within the class according to the inter-object distances within the class; and

the normalization sub unit is configured to normalize the average distance to obtain the intra-class convergence degree of the class.

The dividing unit 300 is configured to, for each class obtained by the iterative merge, group objects within the class that have a distance less than the intra-class convergence degree into a new class, and update the number of classes.

In one embodiment of the present disclosure, the dividing unit may include a first judging sub unit, a marking sub unit, a determining sub unit and a dividing sub unit.

The first judging sub unit is configured to judge whether an inter-object distance within the class is less than the intra-class convergence degree.

The marking sub unit is configured to mark the objects within the class which have a distance less than the intra-class convergence degree with a connection mark.

The determining sub unit is configured to determine connected components within the class according to the connection marks.

The dividing sub unit is configured to divide the class into new classes according to the connected components, and update the number of classes.

The judging unit 400 is configured to judge whether the number of classes after the update is less than the number of classes before the update; if the number of classes after an update is less than the number of classes before the update, the iteratively merging unit iteratively merges the classes according to inter-class Rank-Order distances, until the numbers of classes is the same before and after an update. At this time, a clustering result is obtained, and the clustering result includes one or more classes containing a plurality of objects and one or more classes containing a single object.

Through the device for clustering provided by this embodiment, firstly, by the iteratively merging unit, classes satisfying a certain condition are merged according to inter-class Rank-Order distances, so as to reduce the number of classes; secondly, by the obtaining unit, the intra-class convergence degree is calculated according to inter-object distances within the class; thirdly, by the dividing unit, objects within the class that have a distance less than the intra-class convergence degree are divided into a new class, until all of the classes has been divided. Then the divided classes is re-merged iteratively and re-divided by means of the judging unit until every class is not able to be divided so as to obtain the classes containing a plurality of objects and the classes containing a single object. Thereby, the objects with relatively large dissimilarity are removed during the clustering process, thus the accuracy of the clustering result may be improved. In particular, when objects in a data set are relatively too many, and objects belong to a same class are relatively too few, the accuracy of the clustering result may be higher.

In the above device according to the embodiments, specific implementing manners of all the modules have been described in the embodiments of the related method, which will not be described repeatedly herein.

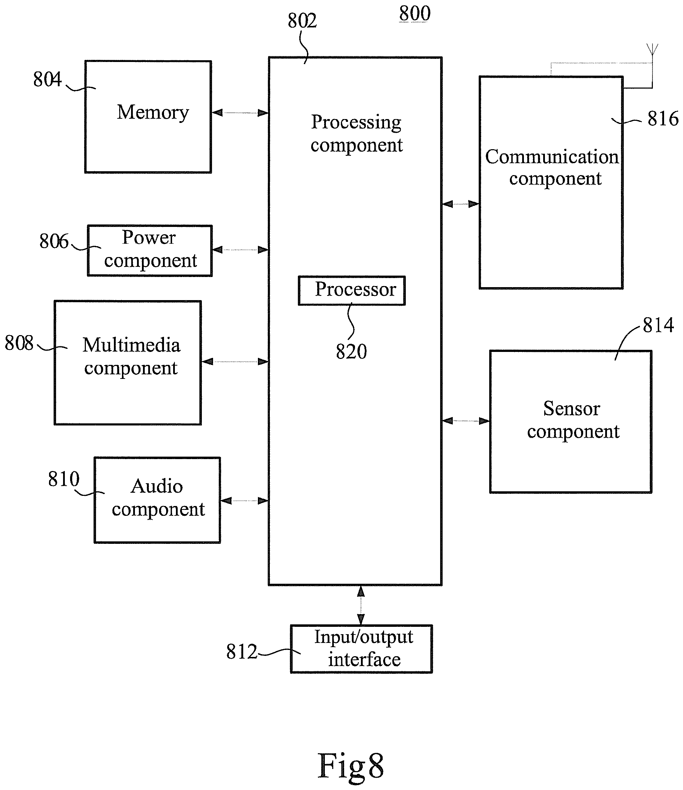

Fig. 8 is a block diagram showing a terminal device 800 for clustering according to an exemplary embodiment. For example, the terminal device 800 may be a mobile phone, a computer, a digital broadcast terminal, a message transceiver device, a game console, a tablet device, a medical equipment, a fitness equipment, a personal digital assistant, and the like.

Referring to Fig. 8, the terminal device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal device 800. The power component 806 may include a power management system, one or more power sources, and any other components associated with the generation, management, and distribution of power in the terminal device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of the terminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal device 800 and other devices. The terminal device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal is enabled to perform a method for clustering, including:

iteratively merging classes according to inter-class Rank-Order distances; obtaining an intra-class convergence degree corresponding to the class after the iterative merge by using inter-object distances within the class; for each class obtained by the iterative merge, grouping objects within the class that have a distance less than the intra-class convergence degree into a new class, and updating the number of classes; if the number of classes after an update is less than the number of classes before the update, returning to the step of performing the iterative merge on the classes according to inter-class Rank-Order distances, until the number of classes is the same before and after an update, to obtain a clustering result which includes one or more classes containing a plurality of objects and one or more classes containing a single object.

Alternatively, the obtaining the intra-class convergence degree corresponding to the class after the iterative merge by using inter-object distances within the class is performed in the following manner:

obtaining respective inter-object distances within the class; and calculating an average distance of all the inter-object distances within the class according to the inter-object distances within the class, to obtain the intra-class convergence degree of the class.

Alternatively, the obtaining the intra-class convergence degree corresponding to the class after the iterative merge by using inter-object distances within the class is performed in the following manner:

obtaining respective inter-object distances within the class; calculating an average distance of all the inter-object distances within the class according to the inter-object distances within the class; and normalizing the average distance to obtain the intra-class convergence degree of the class.

Alternatively, for each class obtained by the iterative merge, the grouping objects within the class that have the distance less than the intra-class convergence degree into the new class, and updating the number of classes is performed in the following manner:

marking the objects within the class which have a distance less than the intra-class convergence degree with a connection mark; determining connected components within the class according to the connection marks; dividing the class into new classes according to the connected components, and updating the number of classes.

Alternatively, the performing the iterative merge on classes according to inter-class Rank-Order distances is performed in the following manner:

obtaining inter-class Rank-Order distances and obtaining normalized inter-class Rank-Order distances; and merging the classes if a inter-class Rank-Order distance is less than a distance threshold and a normalized inter-class Rank-Order distance is less than 1.

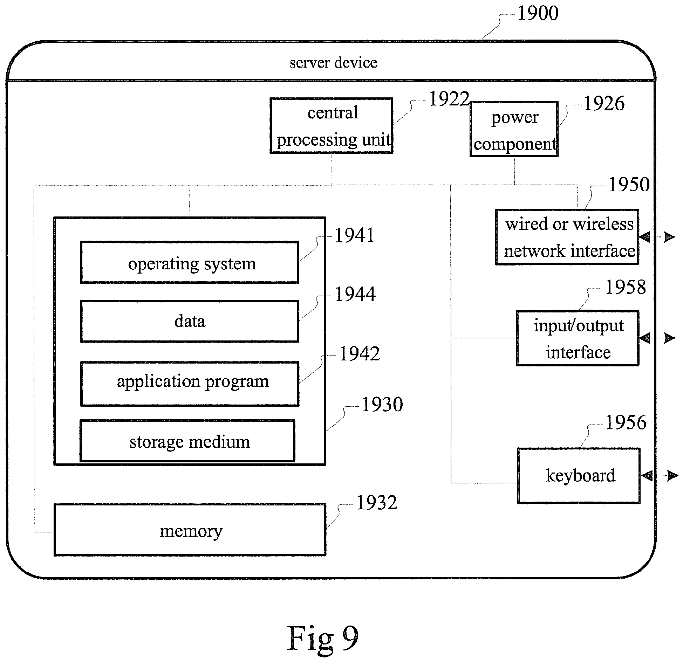

Fig. 9 is a block diagram showing a server according to an embodiment. For example, the server 1900 may vary significantly in configuration or capabilities, and may include one or more central processing units (CPU) 1922 (for example, one or more processors), and a memory 1932, one or more storage media 1930 (for example, one or more mass storage devices) for storing application programs 1942 and data 1944. Wherein, the memory 1932 and the storage medium 1930 may be a transient or a persistent storage. The programs stored in the storage medium 1930 may include one or more modules (not shown in the Figures) each corresponding to a set of instructions in a terminal device. Further, the central processing unit 1922 is configured to communicate with the storage medium 1930 and execute the set of instructions in the storage medium 1930 on the server 1900.

The server 1900 may also include one or more power components 1926, one or more wired or wireless network interfaces 1950, and one or more input/output interfaces 1958, one or more keyboards 1956, and/or, one or more operating systems 1941, such as Windows ServerTM, Mac OS XTM, UnixTM, LinuxTM, FreeBSDTM, and the like.

In exemplary embodiments, there is also provided a non-transitory computer-readable storage medium including instructions, such as included in the memory 1932 or the storage medium 1930, executable by the processor 1922 of a terminal device, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a terminal device, the terminal device is enabled to perform a method for clustering, including:

iteratively merging classes according to inter-class Rank-Order distances; obtaining an intra-class convergence degree corresponding to the class after the iterative merge by using inter-object distances within the class; for each class obtained by the iterative merge, grouping objects within the class that have a distance less than the intra-class convergence degree into a new class, and updating the number of classes; if the number of classes after an update is less than the number of classes before the update, returning to the step of performing the iterative merge on the classes according to inter-class Rank-Order distances, until the number of classes is the same before and after an update, to obtain a clustering result which includes one or more classes containing a plurality of objects and one or more classes containing a single object.

Alternatively, the obtaining the intra-class convergence degree corresponding to the class after the iterative merge by using inter-object distances within the class is performed in the following manner:

obtaining respective inter-object distances within the class; and calculating an average distance of all the inter-object distances within the class according to the inter-object distances within the class, to obtain the intra-class convergence degree of the class.

Alternatively, the obtaining the intra-class convergence degree corresponding to the class after the iterative merge by using inter-object distances within the class is performed in the following manner:

obtaining respective inter-object distances within the class; calculating an average distance of all the inter-object distances within the class according to the inter-object distances within the class; and normalizing the average distance to obtain the intra-class convergence degree of the class.

Alternatively, for each class obtained by the iterative merge, the step of grouping objects within the class that have the distance less than the intra-class convergence degree into the new class, and updating the number of classes is performed in the following manner:

marking the objects within the class which have a distance less than the intra-class convergence degree with a connection mark; determining connected components within the class according to the connection marks; dividing the class into new classes according to the connected components, and updating the number of classes.

Alternatively, the performing the iterative merge on classes according to inter-class Rank-Order distances is performed in the following manner:

obtaining inter-class Rank-Order distances and obtaining normalized inter-class Rank-Order distances; and merging the classes if a inter-class Rank-Order distance is less than a distance threshold and a normalized inter-class Rank-Order distance is less than 1.

It will be appreciated that the present disclosure is not limited to the exact construction that has been described above and illustrated in the accompanying drawings, and that various modifications and changes can be made without departing from the scope thereof. It is intended that the scope of the invention only be limited by the appended claims.

It should be noted that, as used herein, relation terms such as "first" and "second" are used merely to distinguish a subject or an operation from another subject or another operation, and not to imply any substantial relation or order between these subjects or operations. Moreover, terms "include", "contain" or any variation thereof are intended to cover an nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include a" dos not mean that other elements are excluded from the process, method, item or device including the same element.

**Claims**

1. A method for clustering, implemented on a device, the method comprising:

   iteratively merging classes according to inter-class Rank-Order distances;
   obtaining an intra-class convergence degree corresponding to each class after the iterative merge, said intra-class convergence degree being either the average of all the inter-object distances within the class or the normalized average of all the inter-object distances within the class;
   for each class obtained by the iterative merge, removing objects that do not have an inter-object distance, with any other object within the same class, less than the intra-class convergence degree from objects within the class that do have an inter-object distance, with another object within the same class, less than the intra-class convergence degree, grouping together into a new class the objects within the class that have inter-object distances with one another that are less than the intra-class convergence degree, and updating the number of classes; and
   if the number of classes after an update is less than the number of classes before the update, returning to the step of performing the iterative merge on the classes according to inter-class Rank-Order distances, until the numbers of classes is the same before and after an update, whereupon the classes after the update constitute a clustering result.

2. The method according to claim 1, **characterized in that** the obtaining of the intra-class convergence degree corresponding to each class after the iterative merge is performed in the following manner:

   obtaining respective inter-object distances within the class; and
   calculating an average distance of all the inter-object distances within the class according to the inter-object distances within the class, to obtain the intra-class convergence degree of the class.

3. The method according to claim 1, **characterized in that** the obtaining of the intra-class convergence degree corresponding to each class after the iterative merge is performed in the following manner:

   obtaining respective inter-object distances within the class;
   calculating an average distance of all the inter-object distances within the class according to the inter-object distances within the class; and
   normalizing the average distance to obtain the intra-class convergence degree of the class.

4. The method according to anyone of claims 1 to 3, **characterized in that** for each class obtained by the iterative merge, the step of grouping together into a new class objects within the class that have inter-object distances with one another that are less than the intra-class convergence degree and updating the number of classes are performed in the following manner:

   marking the objects within the class which have an inter-object distance with one another less than the intra-class convergence degree with a connection mark;
   determining connected components within the class according to the connection marks; and
   dividing the class into new classes according to the connected components, and updating the number of classes.

5. The method according to anyone of claims 1 to 4, **characterized in that** the performing of the iterative merge on classes according to inter-class Rank-Order distances is performed in the following manner:

   obtaining inter-class Rank-Order distances and obtaining normalized inter-class Rank-Order distances; and
   merging the classes if an inter-class Rank-Order distance is less than a distance threshold and a normalized inter-class Rank-Order distance is less than 1.

6. A device for clustering, comprising:

   an iteratively merging unit (100) configured to iteratively merge classes according to inter-class Rank-Order distances;

an obtaining unit (200) configured to obtain an intra-class convergence degree corresponding to each class after the iterative merge, said intra-class convergence degree being either the average of all the inter-object distances within the class or the normalized average of all the inter-object distances within the class;

a dividing unit (300) configured to, for each class obtained by the iterative merge, remove objects that do not have an inter-object distance, with any other object within the same class, that is less than the intra-class convergence degree from the objects within the class that do have an inter-object distance, with another object within the class, less than the intra-class convergence degree, groping together into a new class the objects within the class that have inter-object distances with one another that are less than the intra-class convergence degree, and update the number of classes; and

a judging unit (400) configured to, if the number of classes after an update is less than the number of classes before the update, control the iteratively merging unit to iteratively merge the classes according to inter-class Rank-Order distances, until the number of classes is the same before and after an update whereupon the classes after the update constitute a clustering result.

7. The device according to claim 6, **characterized in that** the obtaining unit comprises:

a first obtaining sub unit configured to obtain inter-object distances within the class; and

a first calculating sub unit configured to calculate an average distance of all the inter-object distances within the class, to obtain the intra-class convergence degree of the class.

8. The device according to claim 6, **characterized in that** the obtaining unit comprises:

a second obtaining sub unit configured to obtain respective inter-object distances within the class;

a second calculating sub unit configured to calculate an average distance of all the inter-object distances within the class according to the inter-object distances within the class; and

a normalization sub unit configured to normalize the average distance to obtain the intra-class convergence degree of the class.

9. The device according to anyone of claims 6 to 8, **characterized in that** the dividing unit comprises:

a first judging sub unit configured to judge whether an inter-object distance within the class is less than the intra-class convergence degree;

a marking sub unit configured to mark, if an inter-object distance within the class is less than the intra-class convergence degree, the objects corresponding to the inter-object distance within the class with a connection mark;

a determining sub unit configured to determine connected components within the class according to the connection marks; and

a dividing sub unit configured to divide the class into new classes according to the connected components, and update the number of classes.

10. The device according to anyone of claims 6 to 9, **characterized in that** the iteratively merging unit comprises:

a third obtaining sub unit configured to obtain inter-class Rank-Order distances and to obtain normalized inter-class Rank-Order distances; and

a merge sub unit configured to merge the classes which have an inter-class Rank-Order distance that is less than a distance threshold and a normalized inter-class Rank-Order distance that is less than 1.

11. The device according to anyone of claims 6 to 9, wherein the device is a terminal device (800) comprising:

a processor (820), and

a memory (804) configured to store instructions executable by the processor.

12. A computer program including instructions for executing the steps of a method for clustering according to any one of claims 1 to 5 when said program is executed by a computer.

13. A recording medium readable by a computer and having recorded thereon a computer program including instructions for executing the steps of a method for clustering according to any one of claims 1 to 5.

**EP 2 919 165 B1**

**Patentansprüche**

1.  Verfahren zur Clusterbildung, das in einer Vorrichtung implementiert ist, wobei das Verfahren umfasst:

    iteratives Fusionieren von Klassen gemäß Inter-Klassen-Rangordnungsdistanzen,
    Erhalten eines Intra-Klassen-Konvergenzgrades entsprechend jeder Klasse nach der iterativen Fusionierung, wobei der Intra-Klassen-Konvergenzgrad entweder der Durchschnitt aller Inter-Objektdistanzen innerhalb der Klasse oder der normalisierte Durchschnitt aller Inter-Objektdistanzen innerhalb der Klasse ist,
    für jede durch die iterative Fusionierung erhaltene Klasse: Entfernen von Objekten, die keine Inter-Objektdistanz zu irgendeinem anderen Objekt innerhalb derselben Klasse haben, die kleiner als der Intra-Klassen-Konvergenzgrad von Objekten innerhalb der Klasse ist, die eine Inter-Objektdistanz zu einem anderen Objekt innerhalb derselben Klasse haben, die kleiner als der Intra-Klassen-Konvergenzgrad ist, Zusammengruppieren der Objekte innerhalb der Klasse, die zueinander Inter-Objektdistanzen haben, die kleiner als der Intra-Klassen-Konvergenzgrad sind, zu einer neuen Klasse und Aktualisieren der Anzahl von Klassen und,
    wenn die Anzahl von Klassen nach einer Aktualisierung kleiner ist als die Anzahl von Klassen vor der Aktualisierung, Zurückkehren zu dem Schritt des Ausführens der iterativen Fusionierung der Klassen gemäß Inter-Klassen-Rangordnungsdistanzen, bis die Anzahl von Klassen vor und nach einer Aktualisierung die gleiche ist, woraufhin die Klassen nach der Aktualisierung ein Clusterbildungsergebnis bilden.

2.  Verfahren nach Anspruch 1, **dadurch gekennzeichnet, dass** das Erhalten des Intra-Klassen-Konvergenzgrades entsprechend jeder Klasse nach der iterativen Fusionierung in der folgenden Weise ausgeführt wird:

    Erhalten jeweiliger Inter-Objektdistanzen innerhalb der Klasse und
    Berechnen einer Durchschnittsdistanz aller Inter-Objektdistanzen innerhalb der Klasse gemäß den Inter-Objektdistanzen innerhalb der Klasse, um den Intra-Klassen-Konvergenzgrad der Klasse zu erhalten.

3.  Verfahren nach Anspruch 1, **dadurch gekennzeichnet, dass** das Erhalten des Intra-Klassen-Konvergenzgrades entsprechend jeder Klasse nach der iterativen Fusionierung in der folgenden Weise ausgeführt wird:

    Erhalten jeweiliger Inter-Objektdistanzen innerhalb der Klasse,
    Berechnen einer Durchschnittsdistanz aller Inter-Objektdistanzen innerhalb der Klasse gemäß den Inter-Objektdistanzen innerhalb der Klasse und
    Normalisieren der Durchschnittsdistanz, um den Intra-Klassen-Konvergenzgrad der Klasse zu erhalten.

4.  Verfahren nach einem der Ansprüche 1 bis 3, **dadurch gekennzeichnet, dass** für jede durch die iterative Fusionierung erhaltene Klasse der Schritt des Zusammengruppierens zu einer neuen Klasse von Objekten innerhalb der Klasse, die Inter-Objektdistanzen miteinander haben, die kleiner als der Intra-Klassen-Konvergenzgrad sind, und des Aktualisierens der Anzahl von Klassen in der folgenden Weise ausgeführt wird:

    Markieren der Objekte innerhalb der Klasse, die eine Inter-Objektdistanz zueinander haben, die kleiner als der Intra-Klassen-Konvergenzgrad ist, mit einer Verbindungsmarke,
    Bestimmen verbundener Komponenten innerhalb der Klasse gemäß der Verbindungsmarke und
    Teilen der Klasse in neue Klassen gemäß den verbundenen Komponenten und Aktualisieren der Anzahl von Klassen.

5.  Verfahren nach einem der Ansprüche 1 bis 4, **dadurch gekennzeichnet, dass** das Ausführen der iterativen Fusionierung an Klassen gemäß Inter-Klassen-Rangordnungsdistanzen in der folgenden Weise ausgeführt wird:

    Erhalten von Inter-Klassen-Rangordnungsdistanzen und Erhalten von normalisierten Inter-Klassen-Rangordnungsdistanzen und
    Fusionieren der Klassen, wenn eine Inter-Klassen-Rangordnungsdistanz kleiner als eine Distanzschwelle ist und eine normalisierte Inter-Klassen-Rangordnungsdistanz kleiner als 1 ist.

6.  Vorrichtung zur Clusterbildung, umfassend:

    eine Iterative-Fusionier-Einheit (100), die dafür konfiguriert ist, Klassen gemäß Inter-Klassen-Rangordnungsdistanzen iterativ zu fusionieren,
    eine Erhaltseinheit (200), die dafür konfiguriert ist, einen Intra-Klassen-Konvergenzgrad entsprechend jeder Klasse nach der iterativen Fusionierung zu erhalten, wobei der Intra-Klassen-Konvergenzgrad entweder der Durchschnitt aller Inter-Objektdistanzen innerhalb der Klasse oder der normalisierte Durchschnitt aller Inter-Objektdistanzen innerhalb der Klasse ist,

eine Teilungseinheit (300), die dafür konfiguriert ist, für jede durch die iterative Fusionierung erhaltene Klasse Objekte, die keine Inter-Objektdistanz zu irgendeinem anderen Objekt innerhalb derselben Klasse haben, die kleiner als der Intra-Klassen-Konvergenzgrad ist, von den Objekten innerhalb der Klasse zu entfernen, die eine Inter-Objektdistanz zu einem anderen Objekt innerhalb derselben Klasse haben, die kleiner als der Intra-Klassen-Konvergenzgrad ist, Objekte innerhalb der Klasse, die zueinander Inter-Objektdistanzen haben, die kleiner als der Intra-Klassen-Konvergenzgrad sind, zu einer neuen Klasse zusammenzugruppieren, und die Anzahl von Klassen zu aktualisieren, und

eine Beurteilungseinheit (400), die dafür konfiguriert ist, wenn die Anzahl von Klassen nach einer Aktualisierung kleiner als die Anzahl von Klassen vor der Aktualisierung ist, die Iterative-Fusionier-Einheit zu veranlassen, die Klassen gemäß Inter-Klassen-Rangordnungsdistanzen iterativ zu fusionieren, bis die Anzahl von Klassen vor und nach einer Aktualisierung die gleiche ist, woraufhin die Klassen nach der Aktualisierung ein Clusterbildungsergebnis bilden.

7.  Vorrichtung nach Anspruch 6, **dadurch gekennzeichnet, dass** die Erhaltseinheit umfasst:

    eine erste Erhalts-Untereinheit, die dafür konfiguriert ist, Inter-Objektdistanzen innerhalb der Klasse zu erhalten, und

    eine erste Berechnungs-Untereinheit, die dafür konfiguriert ist, eine Durchschnittsdistanz aller Inter-Objektdistanzen innerhalb der Klasse zu berechnen, um den Intra-Klassen-Konvergenzgrad der Klasse zu erhalten.

8.  Vorrichtung nach Anspruch 6, **dadurch gekennzeichnet, dass** die Erhaltseinheit umfasst:

    eine zweite Erhalts-Untereinheit, die dafür konfiguriert ist, jeweilige Inter-Objektdistanzen innerhalb der Klasse zu erhalten,

    eine zweite Berechnungs-Untereinheit, die dafür konfiguriert ist, eine Durchschnittsdistanz aller Inter-Objektdistanzen innerhalb der Klasse gemäß den Inter-Objektdistanzen innerhalb der Klasse zu berechnen, und

    eine Normalisierungs-Untereinheit, die dafür konfiguriert ist, die Durchschnittsdistanz zu normalisieren, um den Intra-Klassen-Konvergenzgrad der Klasse zu erhalten.

9.  Vorrichtung nach einem der Ansprüche 6 bis 8, **dadurch gekennzeichnet, dass** die Teilungseinheit umfasst:

    eine erste Beurteilungs-Untereinheit, die dafür konfiguriert ist zu beurteilen, ob eine Inter-Objektdistanz innerhalb der Klasse kleiner als der Intra-Klassen-Konvergenzgrad ist,

    eine Markierungs-Untereinheit, die dafür konfiguriert ist, wenn eine Inter-Objektdistanz innerhalb der Klasse kleiner als der Intra-Klassen-Konvergenzgrad ist, die Objekte, die der Inter-Objektdistanz innerhalb der Klasse entsprechen, mit einer Verbindungsmarke zu markieren,

    eine Bestimmungs-Untereinheit, die dafür konfiguriert ist, verbundene Komponenten innerhalb der Klasse gemäß den Verbindungsmarken zu bestimmen, und

    eine Teilungs-Untereinheit, die dafür konfiguriert ist, die Klasse in neue Klassen gemäß den verbundenen Komponenten zu unterteilen und die Anzahl von Klassen zu aktualisieren.

10. Vorrichtung nach einem der Ansprüche 6 bis 9, **dadurch gekennzeichnet, dass** die Iterative-Fusionier-Einheit umfasst:

    eine dritte Erhalts-Untereinheit, die dafür konfiguriert ist, Inter-Klassen-Rangordnungsdistanzen zu erhalten und normalisierte Inter-Klassen-Rangordnungsdistanzen zu erhalten, und

    eine Fusionierungs-Untereinheit, die dafür konfiguriert ist, die Klassen, die eine Inter-Klassen-Rangordnungsdistanz haben, die kleiner als eine Distanzschwelle ist, und eine normalisierte Inter-Klassen-Rangordnungsdistanz haben, die kleiner als 1 ist, zu fusionieren.

11. Vorrichtung nach einem der Ansprüche 6 bis 9, wobei die Vorrichtung eine Endgerätvorrichtung (800) ist, die umfasst:

    einen Prozessor (820) und

    einen Speicher (804), der dafür konfiguriert ist, Instruktionen zu speichern, die durch den Prozessor ausgeführt werden können.

**12.** Computerprogramm, das Instruktionen enthält, um die Schritte eines Verfahrens zur Clusterbildung nach einem der Ansprüche 1 bis 5 auszuführen, wenn das Programm durch einen Computer ausgeführt wird.

**13.** Aufzeichnungsmedium, das durch einen Computer gelesen werden kann und auf dem ein Computerprogramm aufgezeichnet ist, das Instruktionen zur Ausführung der Schritte eines Verfahrens zur Clusterbildung nach einem der Ansprüche 1 bis 5 enthält.

**Revendications**

**1.** Procédé de groupage, mis en oeuvre sur un dispositif, le procédé comprenant les étapes suivantes :

fusionner des classes de manière itérative, en fonction de distances inter-classes dans l'ordre des rangs ;
obtenir un degré de convergence intra-classe correspondant à chaque classe après la fusion itérative, ledit degré de convergence intra-classe étant soit la moyenne de toutes les distances inter-objets au sein de la classe soit la moyenne normalisée de toutes les distances inter-objets au sein de la classe ;
pour chaque classe obtenue par la fusion itérative, retirer les objets qui n'ont pas, avec un autre objet quelconque au sein de la même classe, de distance inter-objets inférieure au degré de convergence intra-classe, des objets au sein de la classe qui ont, avec un autre objet au sein de la même classe, une distance inter-objets inférieure au degré de convergence intra-classe, regrouper dans une nouvelle classe les objets au sein de la classe qui ont les uns avec les autres des distances inter-objets qui sont inférieures au degré de convergence intra-classe, et mettre à jour le nombre de classes ; et
si le nombre de classes après une mise à jour est inférieur au nombre de classes avant la mise à jour, retourner à l'étape de réalisation de la fusion itérative des classes en fonction des distances inter-classes dans l'ordre des rangs, jusqu'à ce que le nombre de classes soit identique avant et après une mise à jour, après quoi les classes après la mise à jour constituent un résultat de groupage.

**2.** Procédé selon la revendication 1, **caractérisé en ce que** l'obtention du degré de convergence intra-classe correspondant à chaque classe après la fusion itérative se déroule de la manière suivante :

obtenir les distances inter-objets respectives au sein de la classe ; et
calculer une distance moyenne de toutes les distances inter-objets au sein de la classe selon les distances inter-objets au sein de la classe, pour obtenir le degré de convergence intra-classe de la classe.

**3.** Procédé selon la revendication 1, **caractérisé en ce que** l'obtention du degré de convergence intra-classe correspondant à chaque classe après la fusion itérative se déroule de la manière suivante :

obtenir les distances inter-objets respectives au sein de la classe ;
calculer une distance moyenne de toutes les distances inter-objets au sein de la classe selon les distances inter-objets au sein de la classe ; et
normaliser la distance moyenne pour obtenir le degré de convergence intra-classe de la classe.

**4.** Procédé selon l'une quelconque des revendications 1 à 3, **caractérisé en ce que** pour chaque classe obtenue par la fusion itérative, l'étape de regroupement dans une nouvelle classe des objets de la classe qui ont les uns avec les autres des distances inter-objets qui sont inférieures au degré de convergences intra-classe et la mise à jour du nombre de classes se déroulent de la manière suivante :

marquer les objets au sein de la classe qui ont les uns avec les autres une distance inter-objets inférieure au degré de convergence intra-classe, avec une marque de connexion ;
déterminer les composants connectés au sein de la classe d'après les marques de connexion ; et
diviser la classe en nouvelles classes en fonction des composants connectés, et mettre à jour le nombre de classes.

**5.** Procédé selon l'une quelconque des revendications 1 à 4, **caractérisé en ce que** la réalisation de la fusion itérative de classes selon des distances inter-classes dans l'ordre des rangs se déroule de la manière suivante :

obtenir les distances inter-classes dans l'ordre des rangs et obtenir les distances inter-classes normalisées dans l'ordre des rangs ; et

fusionner les classes si une distance inter-classes dans l'ordre des rangs est inférieure à un seuil de distance et si une distance inter-classes normalisée dans l'ordre des rangs est inférieure à 1.

6. Dispositif de groupage, comprenant :

une unité de fusion itérative (100) conçue pour fusionner des classes de manière itérative, en fonction de distances inter-classes dans l'ordre des rangs ;
une unité d'obtention (200) conçue pour obtenir un degré de convergence intra-classe correspondant à chaque classe après la fusion itérative, ledit degré de convergence intra-classe étant soit la moyenne de toutes les distances inter-objets au sein de la classe soit la moyenne normalisée de toutes les distances inter-objets au sein de la classe ;
une unité de division (300) conçue, pour chaque classe obtenue par la fusion itérative, pour retirer les objets qui n'ont pas, avec un autre objet quelconque au sein de la même classe, de distance inter-objets qui est inférieure au degré de convergence intra-classe, des objets au sein de la classe qui ont, avec un autre objet au sein de la classe, une distance inter-objets inférieure au degré de convergence intra-classe, regrouper dans une nouvelle classe les objets au sein de la classe qui ont les uns avec les autres des distances inter-objets qui sont inférieures au degré de convergence intra-classe, et mettre à jour le nombre de classes ; et
une unité d'estimation (400) conçue pour, si le nombre de classes après une mise à jour est inférieur au nombre de classes avant la mise à jour, commander l'unité de fusion itérative pour fusionner de manière itérative les classes en fonction des distances inter-classes dans l'ordre des rangs, jusqu'à ce que le nombre de classes soit identique avant et après une mise à jour, après quoi les classes après la mise à jour constituent un résultat de groupage.

7. Dispositif selon la revendication 6, **caractérisé en ce que** l'unité d'obtention comprend :

une première sous-unité d'obtention, conçue pour obtenir des distances inter-objets au sein de la classe ; et
une première sous-unité de calcul, conçue pour calculer une distance moyenne de toutes les distances inter-objets au sein de la classe, afin d'obtenir le degré de convergence intra-classe de la classe.

8. Dispositif selon la revendication 6, **caractérisé en ce que** l'unité d'obtention comprend :

une deuxième sous-unité d'obtention, conçue pour obtenir des distances inter-objets respectives au sein de la classe ;
une seconde sous-unité de calcul, conçue pour calculer une distance moyenne de toutes les distances inter-objets au sein de la classe, selon les distances inter-objets au sein de la classe ; et
une sous-unité de normalisation, conçue pour normaliser la distance moyenne afin d'obtenir le degré de convergence intra-classe de la classe.

9. Dispositif selon l'une quelconque des revendications 6 à 8, **caractérisé en ce que** l'unité de division comprend :

une première sous-unité d'estimation, conçue pour estimer si une distance inter-objets au sein de la classe est inférieure au degré de convergence intra-classe;
une sous-unité de marquage, conçue pour marquer, si une distance inter-objets au sein de la classe est inférieure au degré de convergence intra-classe, les objets correspondant à la distance inter-objets au sein de la classe, avec une marque de connexion ;
une sous-unité de détermination, conçue pour déterminer les composants connectés au sein de la classe d'après les marques de connexion ; et
une sous-unité de division conçue pour diviser la classe en nouvelles classes en fonction des composants connectés, et mettre à jour le nombre de classes.

10. Dispositif selon l'une quelconque des revendications 6 à 9, **caractérisé en ce que** l'unité de fusion itérative comprend :

une troisième sous-unité d'obtention, conçue pour obtenir des distances inter-classes dans l'ordre des rangs et pour obtenir des distances inter-classes normalisées dans l'ordre des rangs ; et
une sous-unité de fusion, conçue pour fusionner les classes qui ont une distance inter-classes dans l'ordre des rangs qui est inférieure à un seuil de distance et une distance inter-classes normalisée dans l'ordre des rangs qui est inférieure à 1.

**11.** Dispositif selon l'une quelconque des revendications 6 à 9, dans lequel le dispositif est un terminal (800) comprenant :

un processeur (820), et
une mémoire (804) conçue pour stocker des instructions pouvant être exécutées par le processeur.

**12.** Programme informatique comportant des instructions destinées à exécuter les étapes d'un procédé de groupage selon l'une quelconque des revendications 1 à 5, lorsque ledit programme est exécuté par un ordinateur.

**13.** Support d'enregistrement lisible par un ordinateur et sur lequel est enregistré un programme informatique comportant des instructions destinées à exécuter les étapes d'un procédé de groupage selon l'une quelconque des revendications 1 à 5.

Fig 1

Fig 2

S111

obtaining inter-class Rank-Order distances and obtaining
normalized inter-class Rank-Order distances

S112

merging the classes if an inter-class Rank-Order distance
is less than a distance threshold and a normalized inter-class
Rank-Order distance is less than 1

Fig. 3

S121

obtaining respective inter-object distances within the class

S122

calculating an average distance of all the inter-object
distances within the class, to obtain the intra-class
convergence degree of the class

Fig. 4

S123

obtaining respective inter-object distances within the class

S124

calculating an average distance of all the inter-object
distances within the class

S125

normalizing the average distance to obtain the intra-class
convergence degree of the class

Fig.5

S131

marking the objects within the class which have a distance less than the intra-class convergence degree with a connection mark

S132

determining connected components within the class according to the connection marks

S133

dividing the class into new classes according to the connected components, and updating the number of the classes

Fig. 6

100

iteratively merging unit

200

obtaining unit

300

dividing unit

400

judging unit

Fig.7

Fig8

Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHU.** A rank order distance based clustering algorithm for face tagging. *IEEE Conference on Computer Vision and Pattern Recognition,* 2011, 481-488

- **NANOPOULOS et al.** C2P: Clustering based on Closest Pairs. *Proc. Of the 27th International Conference on Very Large Databases,* 2001, 331-340